# EUROPÄISCHE PATENTSCHRIFT

(11) **EP 1 637 509 B1**
(45) Veröffentlichungstag und Bekanntmachung des Hinweises auf die Patenterteilung: **21.09.2011**
(21) Anmeldenummer: 05015969.8
(22) Anmeldetag: 22.07.2005
(51) Int. Cl.: C05F 17/02

(54) **Rottecontainer**
Compost container
Récipient de compost

(30) Priorität: 20.09.2004 DE 202004014763 U
(43) Veröffentlichungstag der Anmeldung: 22.03.2006
(73) Patentinhaber: Gesellschaft für Abfallwirtschaft Lüneburg mbH, 21357 Bardowick (DE)
(72) Erfinder: Isenberg, Jörn, 21357 Bardowick (DE)
(74) Vertreter: Ostermann, Thomas

(56) Entgegenhaltungen:
- CH-A- 325 848
- DE-A1- 4 230 635

## Beschreibung

Die Erfindung betrifft einen Rottecontainer zur biologischen Vorbehandlung von Restmüll nach dem Oberbegriff des Patentanspruchs 1.

Es ist bekannt, dass der biologische Abbau insbesondere von organikreichen Stoffen in einer vollständig gekapselten Anlagestufe (Rottehalle) stattfindet. Der hierbei stattfindende Intensivrotteprozess wird vor allem von Bakterien getragen, wobei eine Temperaturentwicklung von ca. 60 bis 70°C auftritt. Dieser Prozess wird technisch durch die Zufuhr von Wasser und Luft sowie durch regelmäßiges Auflockern und Wenden des Rotteguts begleitet und kann mehrere Wochen dauern.

Aus der DE 197 19 323 A1 ist ein Rottecontainer zur biologischen Vorbehandlung von Restmüll bekannt, der quaderförmig ausgebildet ist und eine Bodenwandung, mehrere aufrechte Seitenwandungen sowie eine Deckelwandung aufweist. Der Rottecontainer beinhaltet zum einen eine Bewässerungseinrichtung in einem oberen Bereich und eine Belüftungstungseinrichtung in einem unteren Bereich desselben, so dass eine einstufige anaerobe und aerobe Behandlung der biogenen Abfälle in einem so genannten Batch-Verfahren ermöglicht wird. Die Zwischenwandung trägt das Rottegut und weist Belüftungsschlitze auf für den Zugang der von den Belüftungsdüsen abgegebenen Luft in den mit dem Rottegut gefüllten Hohlraum des Rottecontainers. Der Boden des bekannten Rottecontainers ist doppelwandig ausgebildet. Auf einer unteren Bodenwandung sind die die Luft zuführenden Belüftungsdüsen der Belüftungseinrichtung angeordnet. Eine darüber verlaufende weitere oberen Bodenwandung trägt dass Rottegut und weist Belüftungsschlitze auf für den Zugang der von den Belüftungsdüsen abgegebenen Luft in den mit dem Rottegut gefüllten Hohlraum des Rottecontainers.

Nachteilig an dem bekannten Rottecontainer ist, dass sich aufgrund des Eigengewichtes des Rotteguts die Belüftungschlitze der oberen Bodenwandung zusetzen können, so dass eine homogene Belüftung des Rotteguts nicht gegeben ist.

Aus der DE 2 30 635 A1 ist ein mobiler Rottecontainer zum Transport von kompostierfähigen Abfällen bekannt, der eine Bodenwandung, aufrechte Seitenwandungen und eine Deckelwandung umfasst. Im Bereich der Bodenwandung ist eine Belüftungseinrichtung angeordnet zur Belüftung des Rottegutes. Die Belüftungseinrichtung umfasst eine Mehrzahl von Belüftungsöffnungen, die von Abdeckwandungen überdeckt sind, so dass einer Verstopfung der Belüftungsöffnung durch das Rottegut entgegen gewirkt wird.

Aufgabe der Erfindung ist es daher, einen Rottecontainer zur biologischen Vorbehandlung von Restmüll derart weiterzubilden, dass eine verbesserte biologische Abbaubarkeit des Restmülls erzielt wird.

Zur Lösung dieser Aufgabe weist die Erfindung die Merkmale des Patentanspruchs 1 auf.

Der besondere Vorteil des erfindungsgemäßen Rottecontainers besteht darin, dass die Intensivrottezeit auf ca. 14 Tage verringert werden kann. Da während des Intensivrotteprozesses die entstehende Abluftmenge thermisch behandelt werden muss, können durch Reduzierung der Intensivrottezeit die anfallenden Betriebskosten für beispielsweise Stützgas und elektrischen Strom entsprechend verringert werden.

Nach der Erfindung ist der Belüftungseinrichtung eine Abdeckeinrichtung zugeordnet, die mit mindestens einer Abdeckwandung oberhalb von Belüftungsöffnungen der Belüftungseinrichtung verläuft. Vorteilhaft ermöglicht die Abdeckeinrichtung einen wirksamen Schutz vor Verstopfung der Belüftungsöffnungen einerseits und die Vermeidung des Auftretens eines Auflagedrucks auf die die Belüftungsöffnungen aufweisenden Belüftungsteile durch das Rottegut. Die Belüftungseinrichtung nach dem erfindungsgemäßen Rottecontainer kann Platz sparend und Montage freundlich an einer Bodenwandung des Rottecontainers angebracht werden, ohne dass der Boden des Rottecontainers doppelwandig ausgebildet sein müsste. Schließlich lassen sich alle Container auf einfache Weise mit einer solchen Belüftungseinrichtung nachrüsten.

Nach der Erfindung weist die Belüftungseinrichtung eine Mehrzahl von Belüftungsrohren auf, die in einem vorgegebenen Abstand zueinander auf der Bodenwandung angebracht sind. Die Belüftungsrohre weisen eine Vielzahl von Belüftungsöffnungen auf. Nach oben hin werden die Belüftungsrohre durch mindestens eine Abdeckwandung so abgedeckt, dass kein Rottegut die Belüftungsöffnungen erreichen kann.

Erfindungsgemäß ist an einer Deckelwandung eine Bewässerungseinrichtung mit Bewässerungsrohren montiert, die über eine Vielzahl von Mikro-Bewässerungsöffnungen verfügt. Auf diese Weise kann gleichmäßig und verteilt eine Mikrobewässerung des Rotteguts von oben erfolgen.

Vorzugsweise ist die Abdeckeinrichtung dach- oder pilzkopfförmig ausgebildet, wobei ein seitlicher Überstand über die Belüftungsrohre verhindert, dass das Rottegut in die Nähe der Belüftungsöffnungen gelangt.

Nach einer Weiterbildung der Erfindung kann die Abdeckwandung der Abdeckeinrichtung kuppelförmig über dem jeweiligen Belüftungsrohr verlaufen, wobei stets gewährleistet ist, dass die durch die Belüftungsöffnungen austretende Luft unter Umströmung einer freien Wandkante der Abdeckwandung in Richtung des Rotteguts strömen kann.

Nach einer bevorzugten Ausführungsform der Erfindung ist die Abdeckeinrichtung als ein Abdeckwinkel mit rechtwinklig oder in einem stumpfen Winkel zueinander angeordneten Abdeckschenkeln ausgebildet. Vorteilhaft sind die Abdeckschenkel aus einem Metallmaterial hergestellt, so dass die Abdeckeinrichtung aufgrund des Eigengewichtes unverrückbar auf dem Belüftungsrohr zur Anlage kommen kann.

Ein Ausführungsbeispiel der Erfindung wird nachfolgend anhand der Zeichnungen näher erläutert.

Es zeigen:

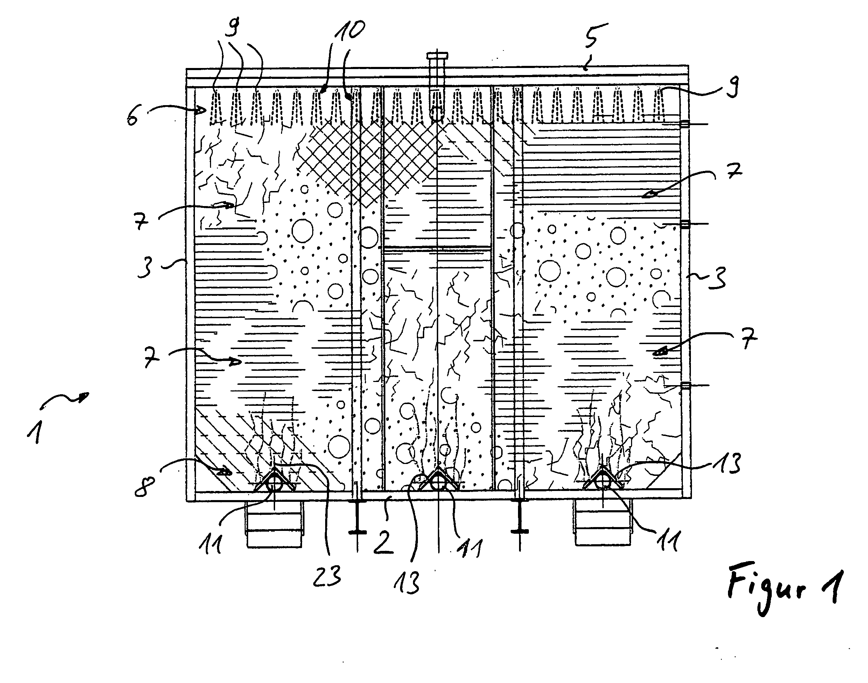

- Figur 1: ein schematischer vertikaler Querschnitt durch einen Rottecontainer,
- Figur 2: eine vergrößerte Darstellung einer Einzelheit in Figur 1 und

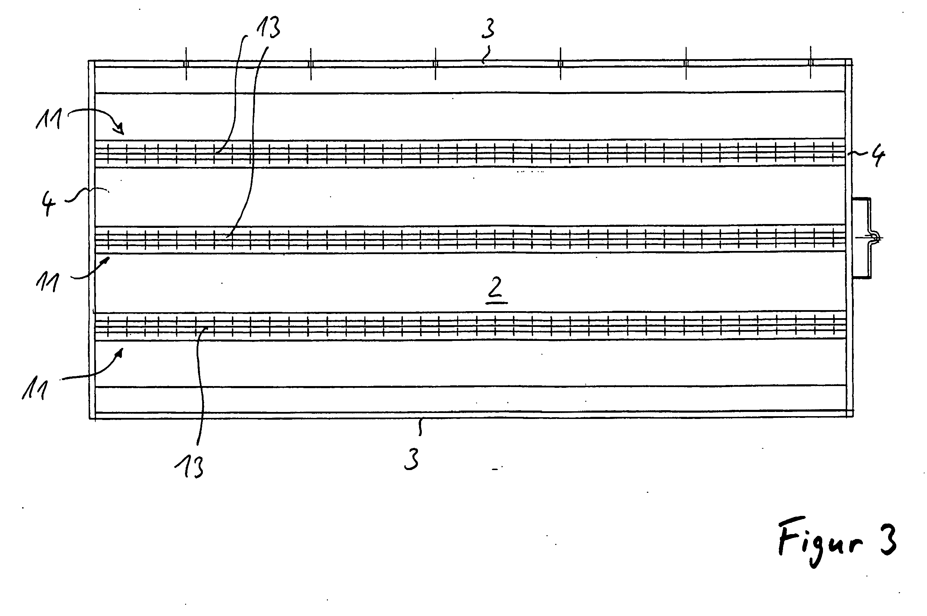

- Figur 3: eine schematische Draufsicht auf einen geöffne- ten und leeren Rottecontainer.

Ein erfindungsgemäßer Rottecontainer 1 zur biologischen Vorbehandlung von Restmüll besteht zum einen aus einem herkömmlichen mit einer abgedichteten Pendelklappe versehenen Container mit einer unteren Bodenwandung 2, randseitig von derselben vertikal nach oben verlaufenden langen Seitenwandungen 3 sowie kurzen Seitenwandungen 4 und eine die durch die Seitenwandungen 3, 4 gebildete Öffnung abdeckenden Deckelwandung 5. Zum anderen enthält der Rottecontainer 1 eine an einer Unterseite der Deckelwandung 5 montierte Bewässerungseinrichtung 6 zur Bewässerung des in dem Hohlraum des Rottecontainers 1 gelagerten Rotteguts 7. An einer Oberseite der Bodenwandung 2 ist eine Belüftungseinrichtung angeordnet zur Belüftung des Rotteguts 7.

Die Deckelwandung 5 ist entfernbar von den Seitenwandungen 3, 4 ausgebildet, so dass von oben das Rottegut 7 in den Rottecontainer 1 gefüllt werden kann.

Die Länge der Deckelwandung 5 und der Bodenwandung 2 kann etwa 6 m, die Breite derselben etwa 2,7 m sowie die Höhe der Seitenwandungen 3, 4 ca. 2,5 m betragen. Alternativ kann der Rottecontainer 1 aber auch andere Abmessungen aufweisen.

Die Bewässerungseinrichtung 6 weist mindestens ein gleichmäßig über die Fläche der Deckelwandung 5 verlegtes Bewässerungsrohr 9 auf, das eine Mehrzahl von Mikro-Bewässerungsöffnungen 10 aufweist. Die Mikro-Bewässerungsöffnungen 10 sind im Wesentlichen auf einer der Deckelwandung 5 abgewandten Seite des Bewässerungsrohres 9 angeordnet. Mittels eines nicht dargestellten Wasser-Vorratsbehälters und einer nicht dargestellten Pumpe kann das Wasser dem Bewässerungsrohr 9 zugeführt und durch die Mikro-Bewässerungsöffnungen 10 eine gleichmäßige Verteilung von Tropfwasser auf das Rottegut 7 ermöglicht werden. Das Wasser wird in Mikrotropfen durch die Mikro-Bewässerungsöffnungen 10 abgegeben. Das Bewässerungsrohr 9 kann beispielsweise ca. 2500 Öffnungen aufweisen. Hierbei wird ein durchschnittlicher Feuchtegehalt von ca. 45 % des Rottegutes erzielt.

Alternativ können auch mehrere Bewässerungsrohre 9 vorzugsweise in Längsrichtung der Deckelwandung 5 in einem vorgegebenen Abstand nebeneinander angeordnet sein, wobei die Rohre parallel geschaltet und über einen gemeinsamen Wasseranschluss gespeist sind, um eine gleichmäßige Bewässerung über die gesamte Fläche des Rottegutes 7 zu gewährleisten.

Im Bereich der Bodenwandung 2 kann eine Auffangleitung vorgesehen sein zur Ableitung des überschüssigen Wassers. Die Belüftungseinrichtung 8 weist im vorliegenden Ausführungsbeispiel drei in Längsrichtung auf der Bodenwandung 2 aufgebrachte Belüftungsrohre 11 auf, die jeweils eine Mehrzahl von in Umfangs- und Längsrichtung derselben angeordneten Belüftungsöffnungen 12 aufweisen. Die Belüftungsrohre 11 erstrecken sich über die gesamte Länge der Bodenwandung 2 und weisen jeweils einen Durchmesser von ca. 75 mm auf. In jedem Belüftungsrohr 11 befinden sich etwa 140 Belüftungsöffnungen 12, die jeweils einen Durchmesser von 5 mm aufweisen. Die Belüftungsrohre 11 sind parallel zueinander geschaltet und erhalten die Luft über eine gemeinsame nicht dargestellte Zuführleitung, die mit einem nicht dargestellten Ventilator verbunden ist.

Zur Sicherstellung einer gleichmäßigen und kontinuierlichen Durchlüftung des Rottegutes 7 ist eine Abdeckeinrichtung 13 vorgesehen, die sich dach- oder kuppelförmig unter Anlage an die Belüftungsrohre 11 oberhalb derselben erstreckt. Die Abdeckeinrichtung 13 ist als ein Abdeckwinkel ausgebildet mit zwei in einem Winkel zueinander stehenden Abdeckschenkeln 14 (Abdeckwandungen). Der Abdeckwinkel 13 erstreckt sich - wie das Belüftungsrohr 11 - über die gesamte Länge der Bodenwandung 2. Im vorliegenden Ausführungsbeispiel stehen die Abdeckschenkel 14 in einem rechten Winkel zueinander. Alternativ können die Abdeckschenkel 14 auch in einem stumpfen oder spitzen Winkel zueinander stehen.

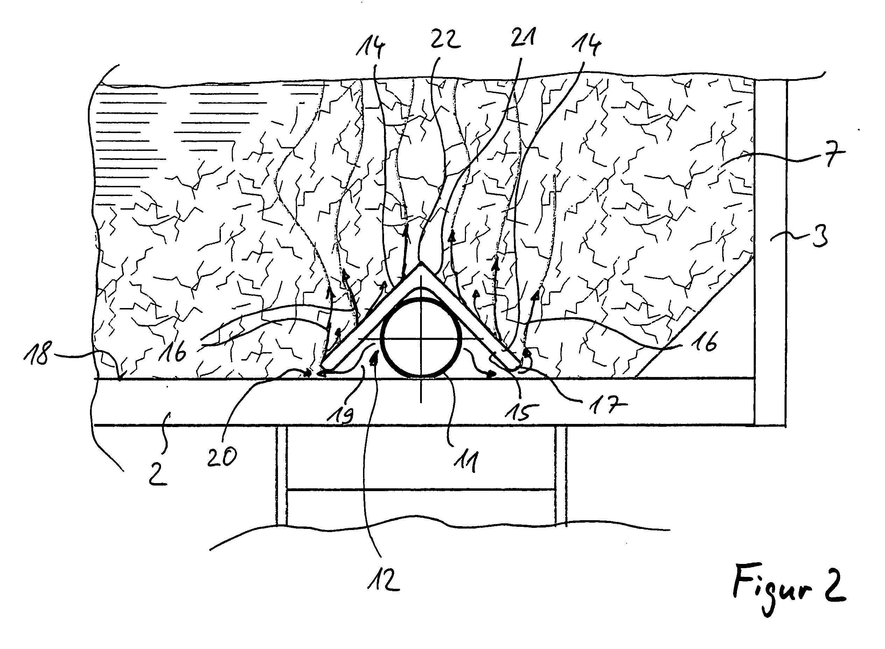

Wie besser aus Figur 2 zu ersehen ist, sind die Abdeckschenkel 14 des Abdeckwinkels 13 im Querschnitt punktuell auf dem Belüftungsrohr 11 abgestützt. Hierbei liegen die Abdeckschenkel 14 mit einer Innenseite 15 derselben entlang einer in Richtung des Belüftungsrohres 11 verlaufenden Anlagelinie an. Damit die von den Belüftungsrohren 11 abgegebene Luft 16 zu dem Rottegut 7 strömen kann, sind freie Randkanten 17 der Abdeckschenkel 14 beabstandet zu einer Innenseite 18 der Bodenwandung 2 angeordnet. Die austretende Luft 16 streicht somit entlang eines sich verjüngenden Luftkanals 19, der durch den Abdeckschenkel 14 einerseits und die Innenseite 18 der Bodenwandung 2 begrenzt wird zu beiden Seiten des Belüftungsrohres 11 zu einer Engstelle 20, von der aus die Luft 16 nach oben vorzugsweise entlang einer Außenseite 21 der Abdeckschenkel 14 das Rottegut 7 durchströmt.

Der Abdeckwinkel 13 weist eine Abdeckspitze 22 auf, die in einer vertikalen Längsmittelebene 23 des Belüftungsrohres 11 verläuft. Die Form der Abdeckwandung 14 ist derart gewählt, dass sie zum einen das über ihr befindliche Rottegut 7 tragen sowie zum anderen ein Eindringen des Rottegutes 7 durch die Engstelle 20 in den Kanal 19 verhindert. Vorteilhaft dient der Abdeckwinkel 13 beim Entleeren des Rottecontainers 1 als Gleitkufe, so dass das Entfernen des Rottegutes 7 nach Beendigung des Intensivrotteprozesses vereinfacht wird.

Vorteilhaft ermöglicht der erfindungsgemäße Rottecontainer 1, dass die Intensivrottezeit auf 14 Tage begrenzt werden kann. Hierdurch ergibt sich eine entsprechende Verringerung der Abluftmenge bzw. der Stützgasmenge. Weiterhin kann eine Verringerung der Abwassermenge (Sickerwasser) erzielt werden. Insbesondere ermöglicht der erfindungsgemäße Rottecontainer 1, dass der Grenzwert AT₄ kleiner als 20 mg O²/gTS (Sauerstoffzehrung innerhalb von 4 Tagen in mg Sauerstoff pro g Trockenmasse) gehalten werden kann, siehe § 16 der 30. BimSchV. Es kann somit die weitere biologische Behandlung in einer "offenen Nachrotte" ohne Abluftbehandlung über RTO erfolgen. Vorteilhaft ist weiterhin, dass Kontrollmessungen innerhalb des Intensivrotteprozesses ohne spezielle Schutzmaßnahmen über diverse Stutzen am Container durchführbar sind.

Dem mit dem Rottecontainer 1 verfolgte Intensivrotteprozess liegen folgende Parameter zu Grunde:

| | |
|---|---|
| Durchschnittlicher Sauerstoffgehalt: | 17 % |
| Durchschnittliche Temperatur: | 60° C |
| Abluftmenge pro Tonne Restgut: | ca. 3400 m³ |
| Abwassermenge pro Tonne bei einer Wasserzugabe von 165 1: | 14 l |
| AT₄ nach 14 Tagen: | < 15 mg O²/gTS |

Die Belüftungsrohre 11 und die Abdeckeinrichtung 13 sind vorzugsweise aus einem Metallmaterial hergestellt.

## Patentansprüche

1. Rottecontainer zur biologischen Vorbehandlung von Restmüll mit einer Bodenwandung (2), mit sich nach oben von der Bodenwandung (2) anschließenden aufrechten Seitenwandungen (3, 4) und mit einer die durch die Seitenwandungen (3, 4) gebildeten Öffnung abdeckenden Deckelwandung (5), dass im Bereich der Bodenwandung (2) eine Belüftungseinrichtung (8) angeordnet ist zur Belüftung des Rottegutes (7) und dass die Belüftungseinrichtung (8) eine Mehrzahl von Belüftungsöffnungen (12) umfasst, durch die Luft in den Hohlraum des Rottecontainers eingespeist wird, dass der Belüftungseinrichtung (8) eine Abdeckeinrichtung (13) zugeordnet ist, die sich mit mindestens einer Abdeckwandung (14) zumindest teilweise oberhalb der Belüftungsöffnungen (12) in einem Abstand zu demselben erstreckt, wobei zum einen das Rottegut (7) von den Belüftungsöffnungen (12) ferngehalten wird und zum anderen die Belüftungsöffnungen (12) freigehalten werden, **dadurch gekennzeichnet, dass** die Belüftungseinrichtung (8) eine Mehrzahl von über die gesamte Länge der Bodenwandung (2) aufgebrachten Belüftungsrohre (11) umfasst, deren Mantelfläche eine Vielzahl von in Umfangs- und Längsrichtung verteilt angeordnete Belüftungsöffnungen (12) aufweist, und dass im Bereich der Deckelwandung (5) eine Bewässungseinrichtung (6) angeordnet ist zur Bewässerung des in dem Rottecontainer gelagerten Rottegutes (7), die mindestens ein an der Deckelwandung (5) befestigtes und an derselben verteilt verlaufendes Bewässerungsrohr (9) aufweist, das eine Mehrzahl von Mikro-Bewässerungsöffnungen (10) aufweist.

2. Rottecontainer nach Anspruch 1, **dadurch gekennzeichnet, dass** die Abdeckeinrichtung (13) hauben- und/oder dachförmig ausgebildet ist.

3. Rottecontainer nach Anspruch 1 oder 2, **dadurch gekennzeichnet, dass** die Abdeckeinrichtung (13) zwei in einem Winkel zueinander stehende und zu einer Abdeckspitze (22) zulaufende Abdeckwandungen (14) aufweist, wobei sich die Abdeckspitze (22) in einer vertikalen Längsmittelebene (23) des jeweiligen Belüftungsrohres (11) erstreckt.

4. Rottecontainer nach einem der Ansprüche 1 bis 3, **dadurch gekennzeichnet, dass** die Abdeckeinrichtung (13) im Querschnitt punktuell mit mindestens einer der Bodenwandung (2) zugewandten Innenseite (15) der Abdeckwandung (14) auf dem Belüftungsrohr (11) aufliegt.

5. Rottecontainer nach einem der Ansprüche 1 bis 4, **dadurch gekennzeichnet, dass** die Abdeckeinrichtung (13) als ein Abdeckwinkel ausgebildet ist, der über zwei vorzugsweise in einem rechten Winkel zueinander stehende Abdeckschenkel (14) aufweist, und dass die Breite der Abdeckschenkel (14) so auf den Durchmesser des Belüftungsrohres (11) abgestimmt ist, dass die Abdeckschenkel (14) jeweils mit einer freien Randkante (17) beabstandet zu der Bodenwandung (2) angeordnet sind.

6. Rottecontainer nach einem der Ansprüche 1 bis 5, **dadurch gekennzeichnet, dass** die Belüftungsöffnungen (12) einen Durchmesser von 5 mm aufweisen.

7. Rottecontainer nach einem der Ansprüche 1 bis 6, **dadurch gekennzeichnet, dass** die Länge der Belüftungsrohre (11) und die Länge der Abdeckeinrichtung (13) zu der Länge der Bodenwandung (2) korrespondiert und dass das Belüftungsrohr (11) einen Durchmesser von ca. 75 mm aufweist.

8. Rottecontainer nach einem der Ansprüche 1 bis 7, **dadurch gekennzeichnet, dass** das Belüftungsrohr (11) und/oder die Abdeckeinrichtung (13) aus einem Metallwerkstoff bestehen.

9. Rottecontainer nach einem der Ansprüche 1 bis 8, **dadurch gekennzeichnet, dass** die freie Randkante (17) der Abdeckwandung (14) beabstandet zu der Bodenwandung (2) angeordnet ist.

## Claims

1. Compost container for biological pretreatment of residual waste comprising a bottom member (2), upright sidewall members (3) extending upward from said bottom member (2) and a top member (5) covering up an opening that is formed by said upright side wall members (3, 4) adjoining said bottom member (2) wherein a ventilation system (8) is provided in the region of the bottom member (2) for aerating the compost material (7), wherein the ventilation system (8) comprises a plurality of ventilation openings (12) through which air is introduced into the compost container cavity, and wherein cover members (13) are assigned to the ventilation system (8) which extend above the ventilation openings (12) in a spaced relation therefrom with at least one cover wall element (14) to keep compost material (7) away from the ventilation openings on the one hand and to keep the ventilation openings (12) from getting clogged up on the other hand, **characterized in that** the ventilation system (8) has a plurality of ventilation tubes (11) extending over the full length of the bottom member (2) whose surfaces are provided with a plurality of ventilation openings (12) distributed in circumferential and longitudinal direction and that in the area of the top member (5) there is an irrigation system (6) provided for irrigating the compost material (7) which system has at least one irrigation pipe (9) secured to the top member (5) which pipe extends along said member (5) and comprises a plurality of micro-irrigation openings (10).

2. Compost container according to Claim 1, **characterized in that** the cover member (13) has the shape of a hood or a roof.

3. Compost container according to Claim 1 or 2, characterizes in that the cover member (13) has two cover wall elements (14) which are arranged in an angular relation to each other and which converse into an apex (22) that extends into a vertical centerline of the respective ventilation tube (11).

4. Compost container according to any of the preceding Claims 1 to 3, **characterized in that** the cover member (13) contacts a ventilation tube (11) in at least one spot of the inner face (15) of a cover wall clement (14) as seen in cross-sectional view.

5. Compost container according to any of the preceding Claims 1 to 4, **characterized in that** the cover member (13) is in the form of a cover angle comprising two legs (14) which are preferably under a right angle relative to each other and that the width of said legs (14) is so adapted to the diameter of the ventilation tube (11) that a free marginal edge of said legs (14) is spaced from the bottom member (2).

6. Compost container according to any of the preceding Claims 1 to 5, **characterized in that** the ventilation openings (12) each have a diameter of 5 mm.

7. Compost container according to any of the preceding Claims 1 to 6, **characterized in that** the length or the ventilation tubes (11) and the length of the cover member (13) conform to the length of the bottom member (2) and that a ventilation tube (11) has a diameter of about 75 mm.

8. Compost container according to any of the preceding Claims 1 to 7, **characterized in that** the ventilation tube (11) and/or the cover member (13) is made or a metallic material.

9. Compost container according to any of the preceding Claims 1 to 8, **characterized in that** a free marginal edge (17) of a cover wall element (14) is spaced from the bottom member (2).

## Revendications

1. Récipient de composte pour le traitement biologique de déchets résiduels, qui comprend une paroi de fond (2), des parois latérales (3, 4), qui, raccordées à la paroi de fond (2), s'élèvent verticalement, et une paroi formant couvercle (5), qui recouvre l'ouverture formée par les parois latérales (3, 4), sachant que, dans la région de la paroi de fond (2), est agencé un dispositif d'aération (8) pour l'aération de la matière compostée (7) et que ledit dispositif d'aération (8) comprend une pluralité d'ouvertures d'aération (12), par lesquels l'air pénètre dans la cavité du récipient de composte, sachant qu'au dispositif d'aération (8) est associé un recouvrement (13), qui s'étend, avec au moins une paroi de recouvrement (14), au moins partiellement, au-dessus des ouvertures d'aération (12), à distance de celles-ci, sachant que, d'une part, la matière compostée (7) est maintenue éloignée desdites ouvertures d'aération (12) et que, d'autre part, lesdites ouvertures d'aération (12) sont maintenues dégagées, **caractérisé en ce que** le dispositif d'aération (8) comprend une pluralité de tubes d'aération (11), qui sont installés sur la totalité de la longueur de la paroi de fond (2) et dont la surface latérale présente une pluralité d'ouvertures d'aération (12) réparties dans la direction périphérique et la direction longitudinale, et que, dans la région de la paroi formant couvercle (5), est dispose un système d'irrigation (6) pour l'irrigation de la matière compostée (7), stockée dans le récipient de composte, lequel système est doté d'au moins un tube d'irrigation (9), qui présente une pluralité de micro-ouvertures d'irrigation (10).

2. Récipient de composte selon la revendication 1, **caractérisé en ce que** le dispositif de recouvrement (13) est réalisé en forme de calotte et / ou en forme de toit.

3. Récipient de composte selon revendication 1 ou 2, **caractérisé en ce que** le dispositif de recouvrement (13) présent deux parois de recouvrement (14), qui forment un angle l'une par rapport à l'autre et convergent en une pointe de recouvrement (22), sachant que ladite pointe de recouvrement (22) s'étend sur un plan médian longitudinal, vertical (23) du tube d'aération (11) respectif.

4. Récipient de composte selon l'une des revendications 1 à 3, **caractérisé en ce que** le dispositif de recouvrement (13) repose, en section transversale, ponctuellement sur le tube d'aération (11), avec au moins une face intérieure (15) de la paroi de recouvrement (14) orientée vers la paroi de fond (2).

5. Récipient de composte selon l'une ou plusieurs des revendications 1 à 4, **caractérisé en ce que** le dispositif de recouvrement (3) est réalisé sous la forme d'un recouvrement angulaire, qui présente deux ailes de recouvrement (14), disposées de préférence à angle droit l'une par rapport à l'autre, et que la largeur de l'aile de recouvrement (14) est adaptée au diamètre du tube d'aération (11) de sorte que lesdites ailes de recouvrement (14) soient disposées chacune à distance de la paroi de fond (2) avec un bord marginal libre (17).

6. Récipient de composte selon l'une des revendications 1 à 5, **caractérisé en ce que** les ouvertures d'aération (12) présentent un diamètre de 5 mm.

7. Récipient de composte selon l'une des revendications 1 à 6, **caractérisé en ce que** la longueur des tube d'aération (11) et la longueur du dispositif de recouvrement (13) correspondent la longueur de la paroi de fond (2) et que le tube d'aération (11) présente un diamètre d'environ 75 mm.

8. Récipient de composte selon l'une des revendications 1 à 7, **caractérisé en ce que** le tube d'aération (11) et / ou le dispositif de recouvrement (13) consiste en une matière métallique.

9. Récipient de composte selon l'une des revendications 1 à 8, **caractérisé en ce que** le bord marginal libre (17) de la paroi de recouvrement (14) est disposé à distance de la paroi de fond (2).
